# EUROPEAN PATENT APPLICATION

(11) **EP 2 624 606 A1**
(43) Date of publication of application: **07.08.2013**
(21) Application number: 13153485.1
(22) Date of filing: 31.01.2013
(51) Int. Cl.: H04W 4/20, H04W 4/12, H04M 3/42

(54) **Apparatus and Method for Generating Smart Reply in a Mobile Device**

(30) Priority: 02.02.2012 IN CH03932012; 20.12.2012 KR 20120149531
(71) Applicant: Samsung Electronics Co., Ltd, Gyeonggi-do 443-742 (KR)
(72) Inventor: Bugalia, Nishant, Noida (IN); Bora, Revoti Prasad, Noida (IN)
(74) Representative: Birchenough, Lewis

(57) **Abstract**

A method and an apparatus for generating a smart reply in a mobile phone is provided. The method includes analyzing at least one of a user profile information and an environment of a user when a reply of a call has failed, obtaining an inference indicating a status of the user based on the user profile information and the environment, generating a text message including a reply failure reason of the call based on the inference, and transmitting the text message to a mobile terminal of a caller.

## Description

### BACKGROUND

### 1. Field of the Invention

The present invention generally relates to the field of mobile communication, and more particularly, to an apparatus and method for generating a smart reply in a mobile device.

### 2. Description of the Related Art

Mobile devices are now widely utilized by millions of people around the globe for communication. Voice and text communication are widely used for communicating with each other. A mobile device allows a caller to contact someone at any location. However, there exist one or more circumstances during which the user (callee) cannot answer a phone call of the caller. Consequently, the caller is not aware of a reason associated with failure to answer the phone call by the user.

Conventional techniques aim at transmitting a pre-defined message by a mobile station associated with the user when the user fails to answer the phone call of the caller. However, the pre-defined message refrains from providing the reason associated with failure to answer the phone call.

In another example, a text message can be transmitted to the caller in response to the user failing to answer the phone call of the caller. The caller can be identified using a caller line identity (CLI) and subsequently the text message can be configured based on the identification. Hence, this technique generates and transmits the text message based on the caller; however, it does not provide the reason associated with failure to answer the phone call.

In yet another example, an automatic text message can be transmitted to a sender of a multimedia message by the user. A multimedia messaging server stores and transmits the automatic text message to a mobile communication terminal associated with the user upon reception of the multimedia message. The automatic reply message is transmitted based on the sender and a priority of the multimedia message. However, the generated automatic text message does not provide the reason associated with failure to answer the phone call.

In the light of the foregoing discussion, there is a need for a system and a method for notifying the caller of the reason associated with failure to answer the phone call by the user of the mobile device.

### SUMMARY

The present invention has been made to address the problems and disadvantages discussed above, and to provide at least the advantages described below. Embodiments of the present invention described herein provide an apparatus and a method for generating a smart reply in a mobile device.

According to an aspect of the present invention, an apparatus for generating a smart reply in a mobile device includes a user profile module for monitoring a user profile information. The apparatus also includes a user profile database for storing the user profile information, and at least one environment sensor for determining an environment of a user. Further, the apparatus includes an inference engine for obtaining an inference indicating a status of the user based on the user profile information and the environment. Moreover, an inference to text generation module for generating a text message including a reply failure reason of a call based on the inference is also provided.

According to an aspect of the present invention, a method of generating a smart reply in a mobile device includes analyzing at least one of a user profile information and an environment of a user when a reply to a call fails. The method also includes obtaining an inference indicating a status of the user based on the user profile information and the environment, and a text message is generated including a reply failure reason of the call based on the inference. Further, the method includes transmitting the text message to a mobile terminal of a caller.

### BRIEF DESCRIPTION OF THE DRAWINGS

The above aspects and features of the present invention will be better understood from the following detailed description, taken in conjunction with the accompanying drawings, throughout which like reference letters indicate corresponding parts in the various figures, in which:
FIG. 1 is a block diagram of an environment in accordance with which embodiments of the present invention can be implemented;
FIG. 2 is a block diagram of a system for generating a smart reply in a mobile device of a user, in accordance with an embodiment of the present invention;
FIG. 3 is a flowchart illustrating a method of generating a smart reply in a mobile device of a user, in accordance with an embodiment of the present invention; and
FIG. 4 is an illustration of samples of a plurality of text messages generated based on an environment and a user profile information, in accordance with an embodiment of the present invention.

### DETAILED DESCRIPTION OF EMBODIMENTS OF THE PRESENT INVENTION

The embodiments herein and the various features and advantageous details thereof are explained more fully with reference to the non-limiting embodiments that are illustrated in the accompanying drawings and detailed in the following description. Descriptions of well-known components and processing techniques may be omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

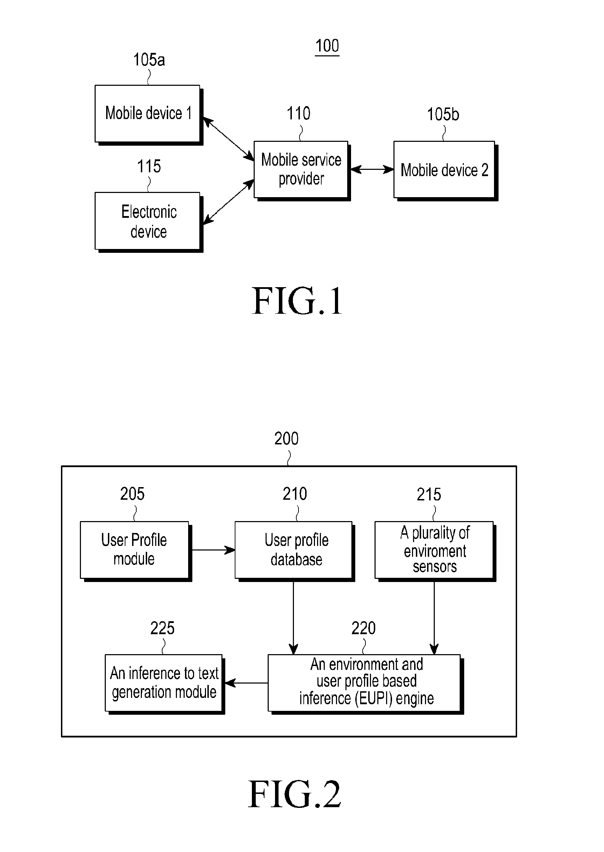

Referring now to the drawings, in which like reference numerals refer to similar or identical elements throughout the several views, FIG. 1 is a block diagram of an environment 100 in accordance with which embodiments of the present invention can be implemented. The environment 100 includes one or more mobile devices such as mobile device 1 105a and mobile device 2 105b. The environment 100 also includes a mobile service provider 110 and an electronic device 115.

The mobile device 1 105a and the mobile device 2 105b may be utilized for establishing voice and text communication with each other. The mobile device 1 105a and the mobile device 2 105b may also establish communication with a user of the electronic device 115. Examples of electronic device 115 includes, but not limited to, computers, laptops, mobile phones, personal digital assistants (PDAs) and telecommunication devices.

The mobile service provider 110 is used for establishing communication between the mobile device 1 105a and the mobile device 2 105b. The mobile device 1 105a and the mobile device 2 105b can be located at various locations. The mobile service provider 110 uses the necessary hardware and software components for establishing communication between the mobile devices. Further, the mobile service provider 110 may also establish communication between the electronic device 115 and the mobile devices. One or more mobile service providers can be used for establishing such communication. The primary function of the mobile service provider 110 is to route a phone call of a caller to a correct recipient. Further, the mobile service provider 110 is also responsible for routing, for example, a text message or a multimedia message (MMS) of a sender to the correct recipient.

In one example, a user of the mobile device 2 105b initiates a phone call to a user of the mobile device 1 105a, where the user of the mobile device 1 105a fails to answer the phone call. Failure to answer the phone call can be due to one or more circumstances of the user of the mobile device 1 105a. As a result, the user of the mobile device 2 105b is not aware of a reason associated with the failure to answer the phone call. Hence, a text message can be transmitted to the mobile device 2 105b by the mobile device 1 105a to notify the user of mobile device 2 105b of the reason. In accordance with an embodiment of the present invention, the text message generated by the mobile device 1 105a is based on an inference. The inference indicates the one or more circumstance of the user during which the user of the mobile device 1 105a fails to answer the phone call.

In one embodiment, an MMS can also be generated by the mobile device 1 105a based on the inference. The MMS is used to notify the user of mobile device 2 105b of the reason when the user of the mobile device 1 105a fails to answer the phone call from the user of the mobile device 2 105b.

FIG. 2 is a block diagram of a system 200 for generating smart reply in a mobile device of a user, in accordance with an embodiment of the present invention. The system 200 includes a user profile module 205, a user profile database 210, a plurality of environment sensors 215, an environment and user profile based inference (EUPI) engine 220 and an inference to text generation module 225. The system components are communicably coupled to each other using a communication interface.

The user profile module 205 is used for monitoring user profile information. The user profile module can be embedded within a mobile device of a user for monitoring the user profile information. Further, the user profile module 205 can also be deployed in a cloud network associated with the mobile device of the user for monitoring. The user profile information also includes various user interactions. Examples of the user profile information can include, but are not limited to, the user does not answer the phone call in a high noise zone, the user does not answer the phone call while driving, the user does not answer the phone call while asleep, the user does not answer the phone call after a pre-determined time period "t", the profile associated with a mobile device of the user is in silent mode, and the like. Further, the user profile information also includes behaviors of the user. Examples of the behaviors of the user include, but are not limited to, most called phone numbers by the user, type of text messages deleted by the user, type of text messages stored by the user, a period of time during which the user refrains from answering one or more phone calls from various callers, and the like.

A machine learning process can be utilized by the user profile module 205 for monitoring the user profile information. Further, artificial intelligence can also be used for monitoring the user profile information. The user can also alter the user profile information at regular intervals, and upon alteration, the user profile module 205 updates the altered user profile information of the user.

The user profile database 210 is used for storing the user profile information. The user profile database 210 includes a memory for storing the user profile information. The user profile database 210 can be embedded within the mobile device of the user, and the user profile database 210 can also be included in the cloud network associated with the mobile device of the user. The user profile information stored in the user profile database 210 is utilized for generating one of a text message or an MMS for notifying a caller of a reason for failure to answer a phone call by the user.

The plurality of environment sensors 215 are used for identifying an environment associated with the user when the user fails to answer the phone call of the caller. Examples of the plurality of environment sensors 215 include, but are not limited to, a noise sensor, a light sensor, a temperature sensor, a motion sensor, a pressure sensor, a global position sensor, an orientation sensor, an acceleration sensor, a smoke sensor and the like. Further, the plurality of environment sensors 215 also identify one or more environment conditions associated with the user. Examples of environment conditions include, but are not limited to, varying noise levels, varying temperature conditions, speed, part of the day and the like.

The plurality of the environment sensors 215 are embedded within the mobile device of the user for determining the environment associated with the user during the failure to answer the phone call of the caller.

The EUPI engine 220 is used for obtaining an inference indicating the reason associated with the failure to answer the phone call of the caller. Further, the inference obtained by the EUPI engine 220 also indicates a circumstance of the user during the failure to answer the phone call. The EUPI engine 220 aggregates the user profile information and the environment identified by the plurality of environment sensors for obtaining the inference.

In one example, if the light sensor identifies the environment condition as dark and the user profile database stores the user profile information indicating the user does not answer the phone call after the pre-determined time period "t", then the EUPI engine 220 aggregates the environment condition identified by the light sensor and the user profile information and determines the inference as "the user is asleep". The inference is hence utilized for generating one of a text message or an MMS that notifies the caller of the reason for the failure to answer the phone call by the user.

The EUPI engine 220 can be embedded within the mobile device of a user for obtaining the inference, and can also be embedded within the cloud network associated with the mobile device of the user for obtaining the inference.

The inference to text generation module 225 is used for generating the text message based on the inference obtained by the EUPI engine 220. The inference to text generation module 225 utilizes one or more templates for formulating the text message. Further, the inference to text generation module 225 also stores the formulated text message. In one example, if the inference is "the user is asleep", then the inference to text generation module 225 generates the text message as "the user is asleep and hence cannot answer the phone call". Hence, the text message generated by the inference to text generation module 225 distinctly notifies to the caller of the reason associated with the failure to answer the phone call by the user.

In one embodiment, the inference to text generation module 225 can also be used to generate an MMS based on the inference obtained by the EUPI engine 220. The MMS generated by the inference to text generation module 225 can include one or more images that notifies to the caller of the reason associated with the failure to answer the phone call by the user.

The inference to text generation module 225 can be embedded within the mobile device of the user for generating one of the text message or the MMS. Further, the inference to text generation module 225 can be present in the cloud network associated with the mobile device of the user for generating one of the text message or the MMS.

In one embodiment, the inference to text generation module 225 can also be embedded within a mobile station associated with the mobile device of the user for generating one of the text message or the MMS.

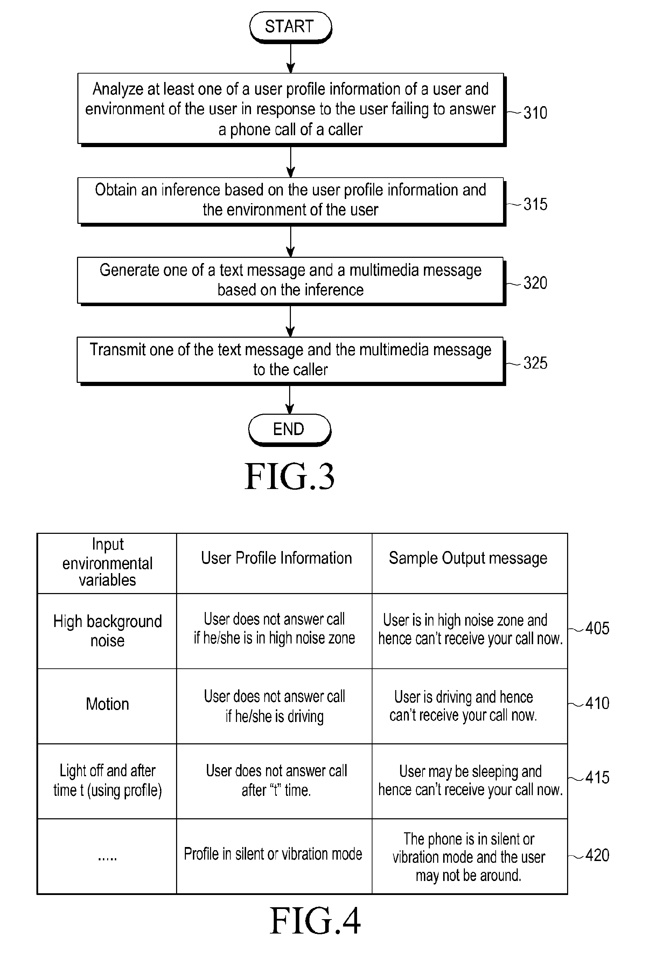

FIG. 3 is a flowchart illustrating a method of generating a smart reply in a mobile device of a user, in accordance with an embodiment of the present invention. At step 310, at least one of a user profile information of a user and an environment of the user in response to the user failing to answer a phone call of a caller is analyzed. The analysis can be performed using, for example, artificial intelligence and a machine learning process. Further, the user profile information is stored in a user profile database for analysis, and pre-defined tables may be used for storing the user profile information for analysis. The user profile information is analyzed to identify one or more user interactions. Further, the user profile information is also analyzed to identify a behavior of the user.

The environment is analyzed to indicate a circumstance of the user during which the user fails to answer the phone call of the caller. As described above, the environment of the user is obtained using the plurality of environment sensors, which detect the environment of the user and further indicate an environmental condition associated with the user during the failure to answer the phone call. Examples of environmental conditions include, but are not limited to, environments with varying noise levels, environments with varying temperature, smoky environments, environments with varying light intensities, and the like. The environment of the user obtained from the plurality of environment sensors is used to obtain an inference.

At step 315 the inference based on the user profile information and the environment of the user is obtained. The user profile information and the environment of the user are aggregated to obtain the inference. The inference obtained in step 315 indicates the circumstance of the user during which the user fails to answer the phone call of the caller.

In one example, the caller initiates the phone call to the user and the user fails to answer the phone call. The profile information of the user can include a situation in which the user does not answer the phone call while driving. A motion sensor embedded within the plurality of environment sensors 215 indicates that the user is in motion. Hence, the user profile information and the indication provided by the motion sensor are used to obtain an inference as "the user is driving". The inference can include a phrase or a sentence indicating the circumstance of the user during the failure to answer the phone call of the caller.

At step 320 a text message is generated based on the inference obtained in step 315. The text message is formulated using one or more templates. Further, the text message generated is also stored for subsequent transmission to the caller. In one example, if the inference is "the user is driving" then the text message "the user is driving and hence cannot answer the phone call" is generated. Hence, the text message distinctly indicates a reason for the failure to answer the phone call of the caller by the user.

In one embodiment, an MMS can also be generated at step 320 based on the inference for indicating the reason for the failure to answer the phone call of the caller by the user. One or more images indicating the circumstance of the user can be stored for subsequent transmission to the caller.

At step 325 the text message generated or MMS in step 320 is transmitted to the caller. One or more mobile stations can be used for transmission of the text message. The text message distinctly signifies to the caller the reason for failure to answer the phone call by the user.

FIG. 4 is an illustration of samples of a plurality of text messages generated based on an environment and a user profile information, in accordance with an embodiment of the present invention. At row 405, it is indicated that a user is in an environment including high background noise. A noise sensor is utilized for identifying such environment.

Further, the user profile information signifies that the user does not answer a phone call in high noise areas. Hence the EUPI engine 220 utilizes the user profile information and the environment of the user to obtain an inference indicating "the user is in high noise zone". The inference is further used to generate a text message.

The inference to text generation module 225 uses one or more templates for generating the text message based on the inference. Upon obtaining the inference, "the user is in high noise zone", the text generation module 225 generates the text message as "the user is in high noise zone and hence cannot receive your call now". The generated text message is transmitted to the caller to notify the caller of a reason associated with the failure to answer the phone call. Furthermore, an MMS including an image indicating that the user is in high noise zone can be generated by the text generation module 225 for subsequent transmission to the caller.

In another example, at row 410, it is indicated that the user is in motion. A motion sensor is used to identify that the user is in motion.

Further, the user profile information signifies that the user does not answer a phone call while driving. Hence, the EUPI engine 220 utilizes the user profile information and the output of the motion sensor indicating the user is in motion for obtaining the inference. The obtained inference indicates "the user is driving". The inference is further used to generate the text message.

Upon obtaining the inference, "the user is driving", the inference to text generation module 225 generates the text message "the user is driving and hence cannot receive your call now". The generated text message is transmitted to the caller to notify the caller of the reason associated with the failure to answer the phone call. Furthermore, an MMS including an image indicating that the user is driving can also be generated by the text generation module 225 for subsequent transmission to the caller.

In yet another example, at row 415, it is indicated that the user is in a dark environment. A light sensor may be used for identifying the user being in the dark environment.

Further, the user profile information signifies that the user does not answer a phone call after a pre-determined time "t". Hence the EUPI engine 220 utilizes the user profile information and the output of the light sensor for obtaining the inference. The obtained inference indicates "the user is asleep".

Upon obtaining the inference as "the user is asleep", the inference to text generation module 225 generates the text message as, "the user may be sleeping and hence cannot receive your call now. The generated text message is transmitted to the caller. Furthermore, an MMS including an image indicating that the user is asleep can also be generated by the text generation module 225 for subsequent transmission to the caller.

Further, in another example, the user profile information can include an indication that a mobile device of the user is in, for example, a silent mode or in a vibration mode. The EUPI engine 220 then merely utilizes the profile information to obtain the inference as "the phone is in silent or vibration mode". The inference to text generation module 225 then generates the text message as "the phone is in silent or vibration mode and the user may not be around". The generated text message is further transmitted to the caller. Furthermore, an MMS including an image indicating that the user's phone is in silent or in vibration mode can also be generated by the text generation module 225 for subsequent transmission to the caller.

Advantageously, the present invention transmits one of a text message and an MMS to the caller when the user fails to answer the phone call of the caller. The text message or MMS is generated automatically based on the user profile information and the environment of the user. By obtaining an inference indicating the circumstance of the user during the failure to answer the phone call, the text message or the MMS is generated. Further, the text message or the MMS generated is transmitted to the caller that distinctly notifies the caller of the reason for failure to answer the phone call by the user.

As indicated above, the present invention has been described with reference to specific embodiments. However, it will be apparent to a person of ordinary skill in the art that various modifications and changes can be made, without departing from the spirit and scope of the present invention, as set forth in the claims below. Accordingly, the specification and figures are to be regarded as illustrative examples of the present invention, rather than to limit the present invention. All such possible modifications are intended to be included within the scope of present invention.

## Claims

1. An apparatus for generating a smart reply in a mobile device, the system comprising:
a user profile module for monitoring user profile information;
a user profile database for storing the user profile information;
at least one environment sensor for determining an environment of a user;
an inference engine for obtaining an inference indicating a status of the user based on the user profile information and the environment; and
an inference to text generation module for generating a text message including a reply failure reason of a call based on the inference.

2. The apparatus as claimed in claim 1, wherein the user profile module utilizes artificial intelligence for monitoring the user profile information.

3. The apparatus as claimed in claim 1, wherein the user profile information includes a behavior of the user.

4. The apparatus as claimed in claim 1, wherein environment sensor determines at least one environmental condition associated with the user.

5. The apparatus as claimed in claim 1, wherein the inference engine aggregates the user profile information and the environment of the user.

6. The apparatus as claimed in claim 1, wherein the inference indicates a circumstance of the user.

7. The apparatus as claimed in claim 1, wherein the inference to text generation module generates a multimedia message including an image based on the inference, and
wherein the image indicates the reply failure reason of the call.

8. A method of generating a smart reply in a mobile device, the method comprising:
analyzing at least one of a user profile information and an environment of a user when a reply of a call has failed ;
obtaining an inference indicating a status of the user based on the user profile information and the environment;
generating a text message including a reply failure reason of the call based on the inference; and
transmitting the text message to a mobile terminal of a caller.

9. The method as claimed in claim 8, wherein analyzing the at least one of a user profile information and an environment of the user comprises storing the user profile information in a user profile database.

10. The method as claimed in claim 8, wherein analyzing the at least one of a user profile information and an environment of the user is performed utilizing at least one of a machine learning process and artificial intelligence.

11. The method as claimed in claim 8, wherein the user profile information includes a behavior of the user.

12. The method as claimed in claim 8, wherein the inference indicates a circumstance of the user.

13. The method as claimed in claim 12, wherein the circumstance of the user includes the reply failure reason indicating failure of answering the call by the user.

14. The method as claimed in claim 8, wherein obtaining an inference comprises aggregating the user profile information and the environment of the user.

15. The method as claimed in claim 8, further comprising:
generating a multimedia message including an image based on the inference,
wherein the image indicates the reply failure reason of the call.
